# EUROPEAN PATENT APPLICATION

(11) **EP 4 017 120 A1**
(43) Date of publication of application: **22.06.2022**
(21) Application number: 19952542.9
(22) Date of filing: 14.11.2019
(51) Int. Cl.: H04W 48/02, H04W 48/08

(54) **ACCESS CONTROL METHOD AND APPARATUS, AND TERMINAL DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN)
(74) Representative: Manitz Finsterwald Patent- und Rechtsanwaltspartnerschaft mbB
(86) International application number: PCT/CN2019/118572
(87) International publication number: WO 2021/092865

(57) **Abstract**

Embodiments of the present application provide an access control method and apparatus, and a terminal device, where the method includes: a terminal device receiving first configuration information sent by a network device, the first configuration information including at least one set of access control parameters; and the terminal device determining a first access category and a first access identity corresponding to a first type of service, determining a first set of access control parameters corresponding to the first access category from the first configuration information, and executing an access control operation corresponding to the first type of service according to the first access identity and the first set of access control parameters, the first type of service being a service for an IOT device.

## Description

### TECHNICAL FIELD

Embodiments of the present application relate to the technical field of mobile communications, and in particular, to an access control method and apparatus, and a terminal device.

### BACKGROUND

A terminal device of an NR-light type, for example, an Internet of Things (Internet of Things, IOT) device, is introduced into New Radio (New Radio, NR) Release 17 (R17). A large number of IOT devices enter an existing network, which causes an impact on signaling and load of the existing network. Hence, access control for the IOT devices in the existing network needs to be redefined.

### SUMMARY

Embodiments of the present application provide an access control method and apparatus, and a terminal device.

An access control method provided by an embodiment of the present application, including:
receiving, by a terminal device, first configuration information sent by a network device, where the first configuration information includes at least one set of access control parameters; and
determining, by the terminal device, a first access category and a first access identifier corresponding to a first type of service, determining a first set of access control parameters corresponding to the first access category from the first configuration information, and executing an access control operation corresponding to the first type of service according to the first access identifier and the first set of access control parameters;
where the first type of service is a service for an IOT device.

An access control method provided by an embodiment of the present application, including:
receiving, by a terminal device, first configuration information and second configuration information sent by a network device, where the first configuration information includes a first set of access control parameters, and the second configuration information includes a corresponding relationship between a number of times of access prohibitions and a scaling factor; and
determining, by the terminal device, a first scaling factor corresponding to a first number of times of access prohibitions for attempting to access a first cell according to the corresponding relationship, and executing an access control operation for the first cell according to the first scaling factor and the first set of access control parameters.

An access control method provided by an embodiment of the present application, including:
receiving, by a terminal device, first configuration information and second configuration information sent by a network device, where the first configuration information includes a first set of access control parameters, and the second configuration information includes a corresponding relationship between an access category and/or an access identifier and a scaling factor; and
determining, by the terminal device, a first scaling factor corresponding to a first access category and/or a first access identifier according to the corresponding relationship, and executing an access control operation according to the first scaling factor and the first set of access control parameters.

An access control method provided by an embodiment of the present application, including:
receiving, by a terminal device, a radio resource control (RRC) release message sent by a first cell, where the RRC release message carries first configuration information, and the first configuration information includes a first set of access control parameters; and
before initiating an RRC connection establishment or an RRC connection recovery to the first cell, executing, by the terminal device, an access control operation for the first cell by using the first set of access control parameters.

An access control apparatus provided by an embodiment of the present application, including:
a receiving unit, configured to receive first configuration information sent by a network device, where the first configuration information includes at least one set of access control parameters; and
a processing unit, configured to determine a first access category and a first access identifier corresponding to a first type of service, determine a first set of access control parameters corresponding to the first access category from the first configuration information, and execute an access control operation corresponding to the first type of service according to the first access identifier and the first set of access control parameters;
where the first type of service is a service for an IOT device.

An access control apparatus provided by an embodiment of the present application, including:
a receiving unit, configured to receive first configuration information and second configuration information sent by a network device, where the first configuration information includes a first set of access control parameters, and the second configuration information includes a corresponding relationship between a number of times of access prohibitions and a scaling factor; and
a processing unit, configured to determine, according to the corresponding relationship, a first scaling factor corresponding to a first number of times of access prohibitions for attempting to access a first cell, and execute an access control operation for the first cell according to the first scaling factor and the first set of access control parameters.

An access control apparatus provided by an embodiment of the present application, including:
a receiving unit, configured to receive first configuration information and second configuration information sent by a network device, where the first configuration information includes a first set of access control parameters, and the second configuration information includes a corresponding relationship between an access category and/or an access identifier and a scaling factor; and
a processing unit, configured to determine, according to the corresponding relationship, a first scaling factor corresponding to a first access category and/or a first access identity, and execute an access control operation according to the first scaling factor and the first set of access control parameters.

An access control apparatus provided by an embodiment of the present application, including:
a receiving unit, configured to receive an RRC release message sent by a first cell, where the RRC release message carries first configuration information, and the first configuration information includes a first set of access control parameters; and
a processing unit, configured to execute an access control operation for the first cell by using the first set of access control parameters before an RRC connection establishment or an RRC connection recovery is initiated to the first cell.

A terminal device provided by an embodiment of the present application, including: a processor and a memory, where the memory is configured to store a computer program, and the processor is configured to invoke and run the computer program stored in the memory to execute the above access control method.

A chip provided by an embodiment of the present application is configured to implement the above access control method.

Specifically, the chip includes: a processor, configured to invoke and run a computer program from a memory, to enable a device installed with the chip to execute the above access control method.

A computer readable storage medium provided by an embodiment of the present application, configured to store a computer program, and the computer program causes a computer to execute the above access control method.

A computer program product provided by an embodiment of the present application, including computer program instructions which cause a computer to execute the above access control method.

A computer program provided by an embodiment of the present application, which, when being run on a computer, causes the computer to execute above access control method.

According to the above technical solutions, the access control of the IOT device in the existing network is realized, and at the same time, an influence on the existing network and an enhanced Mobile Broadband (enhanced Mobile Broadband, eMBB) user is not too great, thereby ensuring a fair and positive access control for all users.

### BRIEF DESCRIPTION OF DRAWINGS

The accompanying drawings described herein are used for providing a further understanding of the present application and form a part of the present application, and schematic embodiments of the present application and the description thereof are used for explaining the present application and do not constitute an improper limitation to the present application. In the accompanying drawings:
FIG. 1 is a schematic diagram of a communication system architecture provided by an embodiment of the present application;
FIG. 2 is a schematic diagram of a UAC-BarringInfoSet provided by an embodiment of the present application;
FIG. 3 is a first schematic flowchart of an access control method provided by an embodiment of the present application;
FIG. 4 is a second schematic flowchart of an access control method provided by an embodiment of the present application;
FIG. 5 is a third schematic flowchart of an access control method provided by an embodiment of the present application;
FIG. 6 is a fourth schematic flowchart of an access control method provided by an embodiment of the present application;
FIG. 7 is a first schematic structural diagram of an access control apparatus provided by an embodiment of the present application;
FIG. 8 is a second schematic structural diagram of an access control apparatus provided by an embodiment of the present application;
FIG. 9 is a third schematic structural diagram of an access control apparatus provided by an embodiment of the present application;
FIG. 10 is a fourth schematic structural diagram of an access control apparatus provided by an embodiment of the present application;
FIG. 11 is a schematic structural diagram of a communication device provided by an embodiment of the present application;
FIG. 12 is a schematic structural diagram of a chip provided by an embodiment of the present application; and
FIG. 13 is a schematic block diagram of a communication system provided by an embodiment of the present application.

### DESCRIPTION OF EMBODIMENTS

Hereinafter, technical solutions in embodiments of the present application will be described with reference to the accompanying drawings in the embodiments of the present application. Apparently, the described embodiments are a part of the embodiments of the present application, rather than all of the embodiments. Based on the embodiments of the present application, all other embodiments obtained by a person of ordinary skill in the art without paying creative efforts all belong to the protection scope of the present application.

The technical solutions in the embodiments of the present application may be applied to various communication systems, for example, a Long Term Evolution (Long Term Evolution, LTE) system, an LTE frequency division duplex (Frequency Division Duplex, FDD) system, an LTE time division duplex (Time Division Duplex, TDD) system, a 5G communication system, or a future communication system, etc.

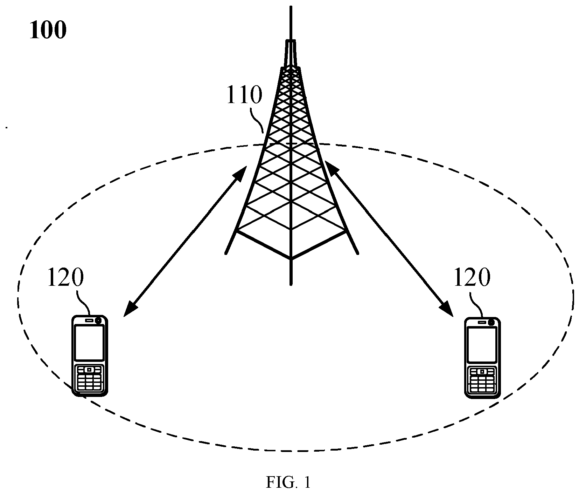

Illustratively, a communication system 100 to which an embodiment of the present application is applied may be shown in FIG. 1. The wireless communication system 100 may include a network device 110. The network device 110 may be a device in communication with a terminal 120 (or referred to as a communication terminal, a terminal). The network device 110 may provide communication coverage for a specific geographic area and may communicate with the terminal located within the coverage area. Optionally, the network device 110 may be an evolutional base station (Evolutional Node B, an eNB or an eNode B) in an LTE system, or a wireless controller in a cloud radio access network (Cloud Radio Access Network, CRAN), or the network device may be a mobile switching center, a relay station, an access point, a vehicle-mounted device, a wearable device, a hub, a switch, a bridge, a router, a network-side device in a 5G network, or a network device in a future communication system, etc.

The communication system 100 further includes at least one terminal 120 within the coverage of the network device 110. The "terminal" used herein includes, but is not limited to, an apparatus connected via a wired line, such as a public switched telephone network (Public Switched Telephone Network, PSTN), a digital subscriber line (Digital Subscriber Line, DSL), a digital cable, and a cable; and/or another data connectivity/network; and/or via a wireless interface, for example, for a cellular network, a wireless local area network (Wireless Local Area Network, WLAN), a digital television network such as a DVB-H network, a satellite network, and an AM-FM broadcast transmitter; and/or another terminal configured to receive/send a communication signal; and/or an Internet of Things (Internet of Things, IoT) device. The terminal configured to communicate through a wireless interface may be referred to as a "wireless communication terminal", a "wireless terminal", or a "mobile terminal". Examples of the mobile terminal include, but are not limited to, a satellite or a cellular telephone; a personal communications system (Personal Communications System, PCS) terminal that can combine a cellular radiotelephone with capabilities of data processing, facsimile, and data communication; a PDA that may include a radiotelephone, a pager, Internet/intranet access, a Web browser, a note, a calendar, and/or a global positioning system (Global Positioning System, GPS) receiver; and a conventional laptop and/or a palm type receiver or other electronic devices that include a radiotelephone transceiver. The terminal may refer to an access terminal, a user equipment (User Equipment, UE), a user unit, a user station, a mobile station, a mobile platform, a remote station, a remote terminal, a mobile device, a user terminal, a terminal, a wireless communication device, a user proxy, or a user apparatus. The access terminal may be a cellular telephone, a cordless telephone, a session initiation protocol (Session Initiation Protocol, SIP) telephone, a wireless local loop (Wireless Local Loop, WLL) station, a personal digital assistant (Personal Digital Assistant, PDA), a handheld device having a function of wireless communication, a computing device or other processing devices connected to a wireless modem, a vehicle-mounted device, a wearable device, a terminal device in the 5G network, or a terminal in the future evolved PLMN, etc.

Optionally, device to device (Device to Device, D2D) communication may be performed between terminals 120.

Optionally, a 5G communication system or a 5G network may also be referred to as a New Radio (New Radio, NR) system or an NR network.

FIG. 1 shows one network device and two terminals illustratively. Optionally, the communication system 100 may include a plurality of network devices and other quantity of terminals may be included in the coverage of each network device, which is not limited in the embodiments of the present application.

Optionally, the communication system 100 may further include other network entities such as a network controller and a mobile management entity, which is not limited in the embodiments of the present application.

It should be understood that, a device having a communication function in the network/system in the embodiments of the present application may be referred to as a communication device. Taking the communication system 100 shown in FIG. 1 as an example, the communication device may include a network device 110 and a terminal 120 having a communication function, and the network device 110 and the terminal 120 may be specific devices described above, which will not be described herein again. The communication device may further include other devices in the communication system 100, for example, other network entities such as a network controller and a mobility management entity, which is not limited in the embodiments of the present application.

It should be understood that, the terms "system" and "network" are often used interchangeably herein. The term "and/or" herein is merely an association relationship describing an associated object, and indicates that there may be three relationships, for example, A and/or B may indicate that there are three cases: A exists alone, A and B exist together, and B exists alone. In addition, the character "/" herein generally indicates that the front and back associated objects are of an "or" relationship.

To facilitate understanding of the technical solutions of the embodiments of the present application, the technical solutions related to the embodiments of the present application will be described in the following.

With people's pursuit of rate, delay, high speed mobility, energy efficiency and diversity and complexity of services in future life, the 3^{rd} Generation Partnership Project (3^{rd} Generation Partnership Project, 3GPP) international standard organization begins to develop 5G in this regard. Main application scenarios of 5G are: enhanced Mobile Broadband (enhanced Mobile Broadband, eMBB), Ultra-Reliable Low-Latency Communications (Ultra-Reliable Low-Latency Communications, URLLC), and massive Machine-Type Communications (massive Machine-Type Communications, mMTC).

On the one hand, the eMBB still aims at obtaining multimedia content, services and data by a user, and the demand thereof increases very quickly. On the other hand, since the eMBB may be deployed in different scenarios, for example, indoors, urban areas, rural areas, etc., the difference in capability and demand thereof is also relatively large, it cannot be generically concluded, and specific deployment scenarios must be analyzed in detail. Typical applications of the URLLC include: industrial automation, power automation, a remote medical operation (surgery), traffic safety, etc. Typical features of the mMTC include: high connection density, small amount of data, delay insensitive services, low cost and long service life of modules, etc.

A terminal device of an NR-light type is introduced in NR R17, and the terminal device of the NR-light type mainly has the following three scenarios.

An industrial wireless sensor (Industrial Wireless Sensors): compared with a terminal device of an URLLC type, the industrial wireless sensor has relatively low demand on latency and reliability. Meanwhile, the cost and power consumption of the industrial wireless sensor are also lower than the terminal device of the URLLC type and a terminal device of an eMBB type.

Video surveillance (Video surveillance) which is mainly used in a scenario of video surveillance such as a smart city and an industrial plant. Data collection and processing in the smart city are performed so as to more effectively monitor and control city resources and provide more efficient services to city residents.

A wearable device (Wearables) which includes a smart watch, an electronic health device, and some medical monitoring devices, etc. One commonality of these devices is small in size.

The common requirements of the above three scenarios are: 1) the terminal device of the NR-light type requires lower device cost and complexity compared with the terminal device of the eMBB type of R15/16. The basic common knowledge is to reduce a bandwidth and a receiving antenna; 2) the size of the terminal device of the NR-light type is relatively small; and 3) the terminal device of the NR-light type needs to achieve an equivalent coverage with the terminal device of the eMBB type of the R15/16, if the coverage loss is caused by the reduction of the receiving antenna, the reduction of the bandwidth, the reduction of the power level or other reduction of the complexity of the terminal device, compensation needs to be made.

For the above three scenarios, each scenario further has the following personality requirements. 1) A reliability requirement of the industrial wireless sensor is 99.99%, an end-to-end delay requirement is 100 ms, a bit rate requirement is 2 Mbps, the device is stationary, and the battery life is several years. For a security-related sensor, the delay requirement is 5-10 ms. 2) The bit rate requirement of video surveillance is 2-4 Mbps, the delay requirement is less than 500 ms, and the reliability requirement is 99-99.9%. Some top video rate requirements are 2-4 Mbps, and the uplink traffic is relatively large. 3) The wearable device may refer to LTE Cat 4, and the rate requirement is 150 Mbps/50 Mbps.

For load control at the network side, a unified access control (Unified Access Control, UAC) mechanism (or access control mechanism for short) is introduced in the NR. In the UAC mechanism, an access category (Access Category) and an access identity (Access Identity) are defined, and the meaning thereof is shown in Table 1 and Table 2 below.

**Table 1**

| Access Category | Conditions related to UE | Type of Access Attempt |
|---|---|---|
| 0 | All | MO signalling resulting from paging |
| 1 | UE is configured for delay tolerant service and subject to access control for Access Category 1, which is judged based on relation of UE's HPLMN and the selected PLMN | All except for Emergency |
| 2 | All | Emergency |
| 3 | All except for the conditions in Access Category 1. | MO signalling on NAS level resulting from other than paging |
| 4 | All except for the conditions in Access Category 1. | MMTEL voice (NOTE 3) |
| 5 | All except for the conditions in Access Category 1. | MMTEL video |
| 6 | All except for the conditions in Access Category 1. | SMS |
| 7 | All except for the conditions in Access Category 1. | MO data that do not belong to any other Access Categories (NOTE 4) |
| 8 | All except for the conditions in Access Category 1 | MO signalling on RRC level resulting from other than paging |
| 9-31 | | Reserved standardized Access Categories |
| 32-63 | All | Based on operator classification |

**Table 2**

| Access Identity | UE Configuration |
|---|---|
| 0 | UE is not configured with any parameters from this table |
| 1 | UE is configured for Multimedia Priority Service (MPS). |
| 2 | UE is configured for Mission Critical Service (MCS). |
| 3-10 | Reserved for future use |
| 11 | Access Class 11 is configured in the UE. |
| 12 | Access Class 12 is configured in the UE. |
| 13 | Access Class 13 is configured in the UE. |
| 14 | Access Class 14 is configured in the UE. |
| 15 | Access Class 15 is configured in the UE. |

An access network element (for example, a base station) broadcasts access control information related to the access category and the access identity, and an access stratum (Access Stratum, AS) of a terminal device performs an access control operation (namely, ACB checking) according to the access control information and an access category and an access identity provided by the AS or a non-access stratum (Non-Access Stratum, NAS).

The access control information broadcasted by the access network element includes UAC parameters (or a set of access control parameters), and the UAC parameters are configured with an access category as a granularity (per access category) and/or a public land mobile network (Public Land Mobile Network, PLMN) as a granularity (per PLMN). The UAC parameters are specifically UAC parameters (namely, UAC-BarringInfoSet), the network side configures up to 8 UAC-BarringInfoSets, and each access category is associated with one UAC-BarringInfoSet, and a total of access categories is 64 (where the access category 0 needs not be configured). Or, one UAC-BarringPerCatList may be associated with a respective PLMN, and if per PLMN information is not configured, the above configuration is applicable to all PLMNs.

For the access category 1, auxiliary information is configured to assist in determining whether an access control operation (namely, ACB checking) is used for the access category 1, and the auxiliary information is uac-Access Category 1-SelectionAssistancelnfo.

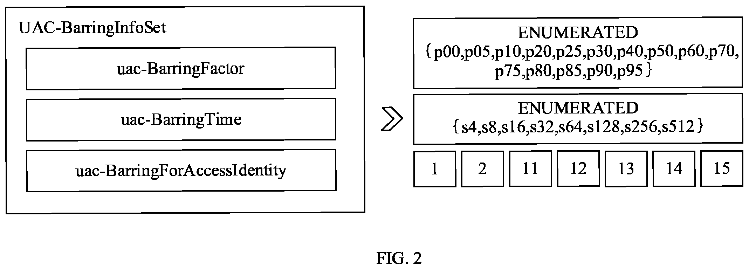

The UAC mechanism refers to the access control operation (namely, ACB checking), the access control operation is performed based on the UAC parameters (namely, the UAC-BarringInfoSet), and the content specifically included in the UAC-BarringInfoSet is shown in FIG. 2. In a case that neither T390 nor T302 is running and the access category is not the access category 0, the execution of the access control operation includes the following steps:
1) If a corresponding bit (bit) of the access identity in the uac-BarringForAccessIdentity is set to 0, it indicates that an access is allowed, and if the corresponding bit is set to 1, it needs to be further decided by the following step 2); and
2) A random number (rand) is generated. A range of the rand is: 0≦rand<1. If the random number is lower than uac-BarringFactor, it indicates that the access is allowed, otherwise it indicates that the access is prohibited. If the access is prohibited, a random number (rand) is generated, and the range of the rand is: 0≦rand<1, T390 is started and T390=(0.7+0.6 × rand) × uac-BarringTime.

For an event triggered by the NAS, the NAS determines an access identity, an access category, and an access reason (or referred to as a cause value). The NAS provides the access identity and the access category to the AS, and the AS is responsible for executing an access control operation. If the access is allowed, the AS notifies the NAS, and the NAS provides the access reason to the AS. Based on feedback of the access control operation of the AS, the NAS is responsible for stopping or allowing service transmission.

The event triggered by the AS includes an event triggered by paging (paging) or an event triggered by RAN notification area update (RAN notification area update, RANU). Where,
for the event triggered by paging: the access category is the access category 0, and it is not controlled by the access control operation. In addition, the cause value is covered, the NAS interacts with the AS, and the NAS provides the cause value;
for the event triggered by the RNAU: the access category is the access category 8, the access identity needs to be provided by the NAS to the AS, and interaction information between the NAS and the AS belongs to an implementation behavior of the terminal device. The cause value determined by the AS is rna-Update.

Due to the introduction of the terminal device of the NR-light type, a large number of IOT devices enter an existing network, which causes an impact on signaling and load of the existing network. Therefore, the access control for the IOT devices in the existing network needs to be redefined. To this end, the following technical solutions of the embodiments of the present application are proposed.

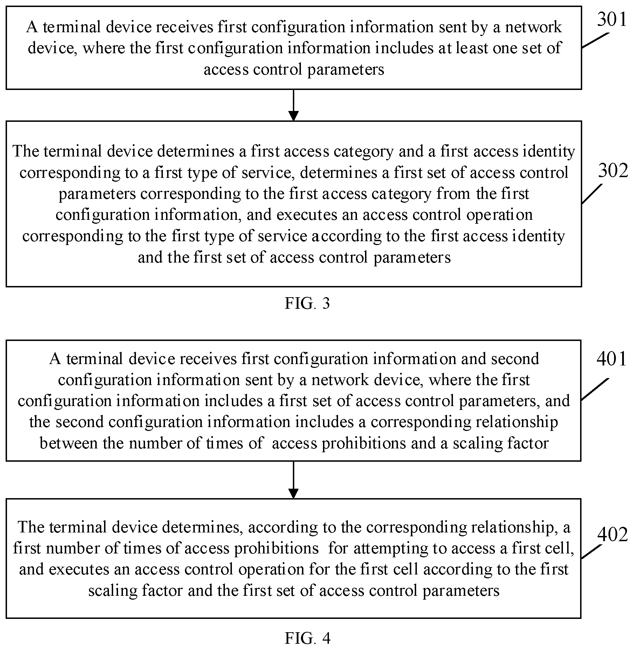

FIG. 3 is a first schematic flowchart of an access control method provided by an embodiment of the present application. As shown in FIG. 3, the access control method includes the following steps.

Step 301: a terminal device receives first configuration information sent by a network device, where the first configuration information includes at least one set of access control parameters.

In the embodiment of the present application, the network device may be a base station, such as a gNB.

In the embodiment of the present application, the terminal receives the first configuration information sent by the network device, where the first configuration information includes at least one set of access control parameters. In an optional implementation, the first configuration information is carried in a system broadcast message. For example, the base station sends the system broadcast message, where the system broadcast message carries the first configuration information, and a terminal acquires the first configuration information from the system broadcast message, where the first configuration information includes at least one set of access control parameters.

Step 302: the terminal device determines a first access category and a first access identity corresponding to a first type of service, determines a first set of access control parameters corresponding to the first access category from the first configuration information, and executes an access control operation corresponding to the first type of service according to the first access identity and the first set of access control parameters.

In an optional implementation, the terminal device is an IOT device, and the first type of service is a service for the IOT device.

In the embodiment of the present application, a new access category (namely, the first access category) and/or a new access identity (namely, the first access identity) is defined for the first type of service. That is, the first access category is an access category defined for the first type of service, and/or the first access identity is an access identity defined for the first type of service.

It should be noted that, the number of the new access category defined for the first type of service may be one or more, and the number of the new access identity defined for the first type of service may be one or more.

It should be noted that, the access category in the embodiment of the present application may also be referred to as a UE access category, and the access identity in the embodiment of the present application may also be referred to as a UE access identity.

Further, in a case that the new access category is defined for the first type of service, the network side may configure a corresponding set of access control parameters (namely, the first set of access control parameters) for the new access category, the first set of access control parameters includes at least one of the following: a first parameter, where the first parameter is used for determining an access identity that allows an access and/or an access identity that prohibits an access; a second parameter, where the second parameter is used for determining a barring factor *(BarringFactor);* and a third parameter, where the third parameter is used for determining barring time *(BarringTime).* In a specific implementation, the set of access control parameters may be a UAC-BarringInfoSet, and content of the UAC-BarringInfoSet is shown in FIG. 2. The UAC-BarringInfoSet includes the following parameters: *uac-BarringForAccessIdentity* (namely, the first parameter), *uac-BarringFactor* (namely, the second parameter), and *uac-BarringTime* (namely, the third parameter).

In the embodiment of the present application, the NAS of the terminal determines that there exists data transmission of the first type of service, and sends first indication information to the AS of the terminal, where the first indication information is used for indicating the first access category and the first access identity corresponding to the first type of service; and the AS of the terminal determines the first set of access control parameters corresponding to the first access category from the first configuration information, and executes the access control operation according to the first access identity and the first set of access control parameters. Further, where the executing the access control operation according to the first access identity and the first set of access control parameters includes: determining whether to allow an access according to the first access identity; and when it is determined that the access is allowed, executing the access control operation according to the first set of access control parameters.

In a specific implementation, when the terminal device initiates a service, the NAS sends the first access category and the first access identity to the AS, and the AS acquires the first set of access control parameters corresponding to the first access category from the system broadcast message, and determines the following parameters according to the first set of access control parameters: *uac-BarringForAccessIdentity, uac-BarringFactor,* and *uac-BarringTime.* Then, it is determined whether the access is allowed according to the first access identity and the *uac-BarringForAccessIdentity*, and if the access is allowed, the access control operation (namely, a UAC process) is performed according to the two parameters including the *uac-BarringFactor* and the *uac-BarringTime.*

It should be noted that, the set of access control parameters in the embodiment of the present application may also be referred to as UAC parameters.

FIG. 4 is a second schematic flowchart of an access control method provided by an embodiment of the present application. As shown in FIG. 4, the access control method includes the following steps.

Step 401: a terminal device receives first configuration information and second configuration information sent by a network device, where the first configuration information includes a first set of access control parameters, and the second configuration information includes a corresponding relationship between the number of times of access prohibitions and a scaling factor.

In the embodiment of the present application, the network device may be a base station, such as a gNB

In the embodiment of the present application, the terminal receives the first configuration information and the second configuration information sent by the network device, where the first configuration information includes the first set of access control parameters, and the second configuration information includes a corresponding relationship between the number of times of access prohibitions and a scaling factor. In an optional implementation, the first configuration information and the second configuration information are carried in a system broadcast message. For example, the base station sends the system broadcast message, where the system broadcast message carries the first configuration information and the second configuration information, and the terminal acquires the first configuration information and the second configuration information from the system broadcast message.

In an optional implementation, the terminal device is an IOT device, and the first set of access control parameters is a set of access control parameters configured for a service initiated by the IOT device. The first set of access control parameters includes at least one of the following: a first parameter, where the first parameter is used for determining an access identity that allows an access and/or an access identity that prohibits an access; a second parameter, where the second parameter is used for determining a barring factor *(BarringFactor);* and a third parameter, where the third parameter is used for determining barring time *(BarringTime).* In a specific implementation, the set of access control parameters may be a UAC-BarringInfoSet, and the content of the UAC-BarringInfoSet is shown in FIG. 2. The UAC-BarringInfoSet includes the following parameters: *uac-BarringForAccessIdentity* (namely, the first parameter), *uac-BarringFactor* (namely, the second parameter), and *uac-BarringTime* (namely, the third parameter).

In an optional implementation, the corresponding relationship between the number of times of access prohibitions and the scaling factor may be shown in Table 3 below, and it should be noted that, the number of times of access prohibitions may be a value or a value range.

**Table 3**

| The Number of Times of Access Prohibitions | Scaling Factor (k) |
|---|---|
| 1, or, 1 to 3 | 0.8 or 0.2 |
| 2, or, 4 to 6 | 0.5 or 0.4 |
| ... | ... |

Step 402: the terminal device determines, according to the corresponding relationship, a first scaling factor corresponding to a first number of times of access prohibitions for attempting to access a first cell, and executes an access control operation for the first cell according to the first scaling factor and the first set of access control parameters.

In the embodiment of the present application, the terminal device counts the number of times of access prohibitions for accessing the first cell through a first counter; where when the terminal device determines that the first cell is prohibited from accessing, the first counter is added with 1; and the terminal device determines the first number of times of access prohibitions according to a numerical value of the first counter.

In a specific implementation, in an access attempt process, the terminal device sets a counter Couner1=0, and if it is determined that the access to a current cell is prohibited, the counter automatically increments 1; and if the prohibited access is cancelled, the terminal device attempts to access again and is prohibited, the counter Counter1 increments 1 again, and so on.

In an optional implementation, when a cell reselection occurs on the terminal device or the terminal device is capable of accessing the first cell, the terminal device resets the first counter to 0.

In the embodiment of the present application, if the counter Counter1 is not equal to 0, when attempting to access the first cell again, the terminal device determines a corresponding scaling factor according to a value of the counter Counter1, and executes an access control operation for the first cell according to the scaling factor and the first set of access control parameters.

Specifically, the terminal device performs scaling processing on at least one parameter in the first set of access control parameters according to the first scaling factor, and executes the access control operation for the first cell by using the at least one parameter after the scaling processing.

In the above solution, the terminal device performs the scaling processing on the at least one parameter in the first set of access control parameters according to the first scaling factor, which may be implemented by but not limited to the following manners.

Manner 1) *uac-BarringFactor* and/or *uac-BarringTime* multiplies the scaling factor.

Manner 2) *uac-BarringFactor* and/or *uac-BarringTime* divides the scaling factor.

Manner 3) *uac-BarringFactor* and/or *uac-BarringTime* pluses the scaling factor.

Manner 4) *uac-BarringFactor* and/or *uac-BarringTime* subtracts the scaling factor.

It should be noted that, the access control operation for the first cell is executed by using the at least one parameter after the scaling processing, which is consistent with a common access control operation, and the difference lies in that a size of a parameter is adjusted.

It should be noted that, the set of access control parameters in the embodiment of the present application may also be referred to as UAC parameters.

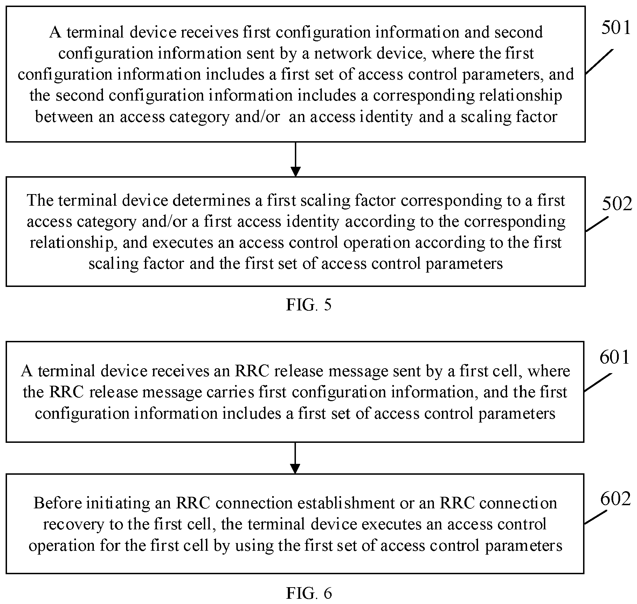

FIG. 5 is a third schematic flowchart of an access control method provided by an embodiment of the present application. As shown in FIG. 5, the access control method includes the following steps.

Step 501: a terminal device receives first configuration information and second configuration information sent by a network device, where the first configuration information includes a first set of access control parameters, and the second configuration information includes a corresponding relationship between an access category and/or an access identity and a scaling factor.

In the embodiment of the present application, the network device may be a base station, for example, a gNB.

In the embodiment of the present application, the terminal receives the first configuration information and the second configuration information sent by the network device, where the first configuration information includes the first set of access control parameters, and the second configuration information includes the corresponding relationship between the access category and/or the access identity and the scaling factor. In an optional implementation, the first configuration information and the second configuration information are carried in a system broadcast message. For example, the base station sends the system broadcast message, where the system broadcast message carries the first configuration information and the second configuration information, and the terminal acquires the first configuration information and the second configuration information from the system broadcast message.

In an optional implementation, the terminal device is an IOT device, and the first set of access control parameters is a set of access control parameters configured for a service initiated by the IOT device. The first set of access control parameters includes at least one of the following: a first parameter, where the first parameter is used for determining an access identity that allows an access and/or an access identity that prohibits an access; a second parameter, where the second parameter is used for determining a barring factor *(BarringFactor);* and a third parameter, where the third parameter is used for determining barring time *(BarringTime).* In a specific implementation, the set of access control parameters may be a UAC-BarringInfoSet, and the content of the UAC-BarringInfoSet is shown in FIG. 2. The UAC-BarringInfoSet includes the following parameters: *uac-BarringForAccessIdentity* (namely, the first parameter), *uac-BarringFactor* (namely, the second parameter), and *uac-BarringTime* (namely, the third parameter).

In an optional implementation, the corresponding relationship between the access category and/or the access identity and the scaling factor may be implemented through a scaling factor list, and each scaling factor in the list corresponds to an access category and/or an access identity. If a value of the scaling factor is 0, it indicates that the scaling is not supported.

Step 502: the terminal device determines a first scaling factor corresponding to a first access category and/or a first access identity according to the corresponding relationship, and executes an access control operation according to the first scaling factor and the first set of access control parameters.

In the embodiment of the present application, the NAS of the terminal determines that there exists data transmission of a first type of service, and sends first indication information to the AS of the terminal, where the first indication information is used for indicating the first access category and the first access identity corresponding to the first type of service; and the AS of the terminal determines the first set of access control parameters corresponding to the first access category from the first configuration information, and determines the first scaling factor corresponding to the first access category and/or the first access identity from the second configuration information, and executes the access control operation according to the first scaling factor and the first set of access control parameters.

Specifically, the terminal device performs scaling processing on at least one parameter in the first set of access control parameters according to the first scaling factor, and executes an access control operation by using the at least one parameter after the scaling processing.

In the above solution, the terminal device performs the scaling processing on the at least one parameter in the first set of access control parameters according to the first scaling factor, which may be implemented by but not limited to the following manners.

Manner 1) *uac-BarringFactor* and/or *uac-BarringTime* multiplies the scaling factor.

Manner 2) *uac-BarringFactor* and/or *uac-BarringTime* divides the scaling factor.

Manner 3) *uac-BarringFactor* and/or *uac-BarringTime* pluses the scaling factor.

Manner 4) *uac-BarringFactor* and/or *uac-BarringTime* subtracts the scaling factor.

It should be noted that, the access control operation for the first cell is executed by using the at least one parameter after the scaling process, which is consistent with a common access control operation, and the difference lies in that a size of a parameter is adjusted.

It should be noted that, the set of access control parameters in the embodiment of the present application may also be referred to as UAC parameters.

FIG. 6 is a fourth schematic flowchart of an access control method provided by an embodiment of the present application. As shown in FIG. 6, the access control method includes the following steps.

Step 601: a terminal device receives an RRC release message sent by a first cell, where the RRC release message carries first configuration information, and the first configuration information includes a first set of access control parameters.

In the embodiment of the present application, when the network side releases and the terminal device enters an idle state or an inactive state, the network side configures a first set of access control parameters for a next access to the network for the terminal device through the RRC release message.

In an optional implementation, the terminal device is an IOT device, and the first set of access control parameters is a set of access control parameters configured for a service initiated by the IOT device. The first set of access control parameters includes at least one of the following: a first parameter, where the first parameter is used for determining an access identity that allows an access and/or an access identity that prohibits an access; a second parameter, where the second parameter is used for determining a barring factor *(BarringFactor);* and a third parameter, where the third parameter is used for determining barring time *(BarringTime).* In a specific implementation, the set of access control parameters may be a UAC-BarringInfoSet, and the content of the UAC-BarringInfoSet is shown in FIG. 2. The UAC-BarringInfoSet includes the following parameters: *uac-BarringForAccessIdentity* (namely, the first parameter), *uac-BarringFactor* (namely, the second parameter), and *uac-BarringTime* (namely, the third parameter).

In an optional implementation, the RRC release message further carries at least one of the following:
first indication information, where the first indication information is used for indicating valid time of the first set of access control parameters; and
second indication information, where the second indication information is used for indicating a valid area range (for example, a cell list) of the first set of access control parameters.

Further, after receiving the first set of access control parameters, the terminal device starts a first timer, and a duration of the first timer is determined based on the first indication information; and when the first timer expires, the terminal device releases the first set of access control parameters.

Further, after receiving the first set of access control parameters, the terminal device releases the first set of access control parameters when a cell reselection falls outside the valid area range indicated by the second indication information.

In the embodiment of the present application, after the terminal device releases the first set of access control parameters, when an access to the first cell is attempted again, the access control operation for the first cell is executed by using the set of access control parameters configured in a system broadcast message.

Step 602: before initiating an RRC connection establishment or an RRC connection recovery to the first cell, the terminal device executes an access control operation for the first cell by using the first set of access control parameters.

In the embodiment of the present application, after the terminal device acquires the first set of access control parameters through the RRC release message, and before initiating the RRC connection establishment or the RRC connection recovery to the first cell, the terminal device executes the access control operation for the first cell by using the first set of access control parameters, and ignores a set of access control parameters in the system broadcast message.

It should be noted that, the set of access control parameters in the embodiment of the present application may also be referred to as UAC parameters.

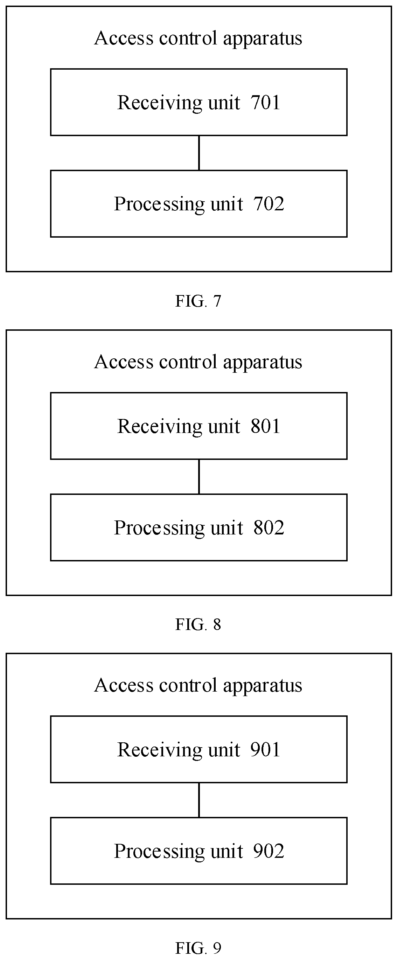

FIG. 7 is a first schematic structural diagram of an access control apparatus provided by an embodiment of the present application, and as shown in FIG. 7, the access control apparatus includes:
a receiving unit 701, configured to receive first configuration information sent by a network device, where the first configuration information includes at least one set of access control parameters; and
a processing unit 702, configured to determine a first access category and a first access identity corresponding to a first type of service, determine a first set of access control parameters corresponding to the first access category from the first configuration information, and execute an access control operation corresponding to the first type of service according to the first access identity and the first set of access control parameters;
where the first type of service is a service for an IOT device.

In an optional implementation, the processing unit 702 is configured to send first indication information to an access stratum (AS) of a terminal by a non-access stratum (NAS) of the terminal when it is determined that there exists data transmission of the first type of service, where the first indication information is used for indicating the first access category and the first access identity corresponding to the first type of service; and the AS of the terminal determines the first set of access control parameters corresponding to the first access category from the first configuration information, and executes the access control operation according to the first access identity and the first set of access control parameters.

In an optional implementation, the processing unit 702 is configured to determine whether to allow an access according to the first access identity; and when it is determined that the access is allowed, execute the access control operation according to the first set of access control parameters.

In an optional implementation, the first access category is an access category defined for the first type of service; and/or,
the first access identity is an access identity defined for the first type of service.

In an optional implementation, the first set of access control parameters includes at least one of the following:
a first parameter, where the first parameter is used for determining an access identity that allows an access and/or an access identity that prohibits an access;
a second parameter, where the second parameter is used for determining a barring factor; and
a third parameter, where the third parameter is used for determining barring time.

It should be understood by a person skilled in the art that, the relevant description of the access control apparatus in the embodiments of the present application may be understood with reference to the relevant description of the access control method in the embodiments of the present application.

FIG. 8 is a second schematic structural diagram of an access control apparatus provided by an embodiment of the present application, and as shown in FIG. 8, the access control apparatus includes:
a receiving unit 801, configured to receive first configuration information and second configuration information sent by a network device, where the first configuration information includes a first set of access control parameters, and the second configuration information includes a corresponding relationship between a number of times of access prohibitions and a scaling factor; and
a processing unit 802, configured to determine, according to the corresponding relationship, a first scaling factor corresponding to a first number of times of access prohibitions for attempting to access a first cell, and execute an access control operation for the first cell according to the first scaling factor and the first set of access control parameters.

In an optional implementation, the processing unit 802 is further configured to count a number of times of access prohibitions for accessing the first cell by using a first counter; where when it is determined that the first cell is prohibited from accessing, the first counter is added with 1; and determine the first number of times of access prohibitions according to a numerical value of the first counter.

In an optional implementation, the processing unit 802 is further configured to reset the first counter to 0 when a cell reselection occurs on the terminal device or the terminal device is capable of accessing the first cell.

In an optional implementation, the processing unit 802 is configured to perform scaling processing on at least one parameter in the first set of access control parameters according to the first scaling factor, and execute the access control operation for the first cell by using the at least one parameter after the scaling processing.

In an optional implementation, the first set of access control parameters includes at least one of the following:
a first parameter, where the first parameter is used for determining an access identity that allows an access and/or an access identity that prohibits an access;
a second parameter, where the second parameter is used for determining a barring factor; and
a third parameter, where the third parameter is used for determining barring time.

In an optional implementation, the terminal device is an IOT device.

It should be understood by a person skilled in the art that, the relevant description of the access control apparatus in the embodiments of the present application may be understood with reference to the relevant description of the access control method in the embodiments of the present application.

FIG. 9 is a third schematic structural diagram of an access control apparatus provided by an embodiment of the present application, and as shown in FIG. 9, the access control apparatus includes:
a receiving unit 901, configured to receive first configuration information and second configuration information sent by a network device, where the first configuration information includes a first set of access control parameters, and the second configuration information includes a corresponding relationship between an access category and/or an access identity and a scaling factor; and
a processing unit 902, configured to determine, according to the corresponding relationship, a first scaling factor corresponding to the first access category and/or the first access identity, and execute an access control operation according to the first scaling factor and the first set of access control parameters.

In an optional implementation, the processing unit 902 is configured to send first indication information to an access stratum (AS) of the terminal by a non-access stratum (NAS) of the terminal when it is determined that there exists data transmission of a first type of service, where the first indication information is used for indicating the first access category and the first access identity corresponding to the first type of service; and the AS of the terminal determines the first set of access control parameters corresponding to the first access category from the first configuration information, and determines the first scaling factor corresponding to the first access category and/or the first access identity from the second configuration information.

In an optional implementation, the processing unit 902 is configured to perform scaling processing on at least one parameter in the first set of access control parameters according to the first scaling factor, and execute an access control operation by using the at least one parameter after the scaling processing.

In an optional implementation, the first set of access control parameters includes at least one of the following:
a first parameter, where the first parameter is used for determining an access identity that allows an access and/or an access identity that prohibits an access;
a second parameter, where the second parameter is used for determining a barring factor; and
a third parameter, where the third parameter is used for determining barring time.

In an optional implementation, the terminal device is an IOT device.

It should be understood by a person skilled in the art that, the relevant description of the access control apparatus in the embodiments of the present application may be understood with reference to the relevant description of the access control method in the embodiments of the present application.

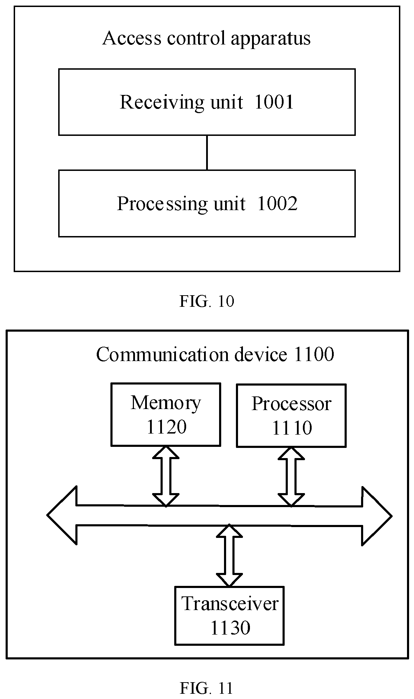

FIG. 10 is a fourth schematic structural diagram of an access control apparatus provided by an embodiment of the present application, and as shown in FIG. 10, the access control apparatus includes:
a receiving unit 1001, configured to receive an RRC release message sent by a first cell, where the RRC release message carries first configuration information, and the first configuration information includes a first set of access control parameters; and
a processing unit 1002, configured to execute an access control operation for the first cell by using the first set of access control parameters before an RRC connection establishment or an RRC connection recovery is initiated to the first cell.

In an optional implementation, the RRC release message further carries at least one of the following:
first indication information, where the first indication information is used for indicating valid time of the first set of access control parameters; and
second indication information, where the second indication information is used for indicating a valid area range of the first set of access control parameters.

In an optional implementation, the processing unit 1002 is further configured to: after the first set of access control parameters is received, start a first timer, where a duration of the first timer is determined based on the first indication information; and when the first timer expires, release the first set of access control parameters.

In an optional implementation, the processing unit 1002 is further configured to, after the first set of access control parameters is received, release the first set of access control parameters when a cell reselection falls outside the valid area range indicated by the second indication information.

In an optional implementation, the processing unit 1002 is further configured to: after the first set of access control parameters is released, use a set of access control parameters configured in a system broadcast message to execute an access control operation for the first cell when an access to the first cell is attempted again.

In an optional implementation, the first set of access control parameters includes at least one of the following:
a first parameter, where the first parameter is used for determining an access identity that allows an access and/or an access identity that prohibits an access;
a second parameter, where the second parameter is used for determining a barring factor; and
a third parameter, where the third parameter is used for determining barring time.

In an optional implementation, the terminal device is an IOT device.

It should be understood by a person skilled in the art that, the relevant description of the access control apparatus in the embodiments of the present application may be understood with reference to the relevant description of the access control method in the embodiments of the present application.

FIG. 11 is a schematic structural diagram of a communication device 1100 provided by an embodiment of the present application, and the communication device may be a terminal device or a network device. As shown in FIG. 11, the communication device 1100 includes a processor 1110, where the processor 1110 may invoke and run a computer program from a memory to implement the method in the embodiments of the present application.

Optionally, as shown in FIG. 11, the communication device 1100 may further include a memory 1120. The processor 1110 may invoke and run the computer program from the memory 1120 to implement the method in the embodiments of the present application.

The memory 1120 may be a separate device which is independent of the processor 1110, or may be integrated in the processor 1110.

Optionally, as shown in FIG. 11, the communication device 1100 may further include a transceiver 1130, and the processor 1110 may communicate with other devices by controlling the transceiver 1130. Specifically, information or data may be sent to other devices, or information or data sent by other devices can be received.

The transceiver 1130 may include a transmitter and a receiver. The transceiver 1130 may further include an antenna, and the quantity of the antennas may be one or more.

Optionally, the communication device 1100 may specifically be a network device in the embodiments of the present application, and the communication device 1100 may implement corresponding processes implemented by the network device in various methods in the embodiments of the present application. It is not described herein for simplicity.

Optionally, the communication device 1100 may specifically be a mobile terminal or a terminal device in the embodiments of the present application, and the communication device 1100 may implement corresponding processes implemented by the mobile terminal or the terminal device in various methods in the embodiments of the present application. It is not described herein for simplicity.

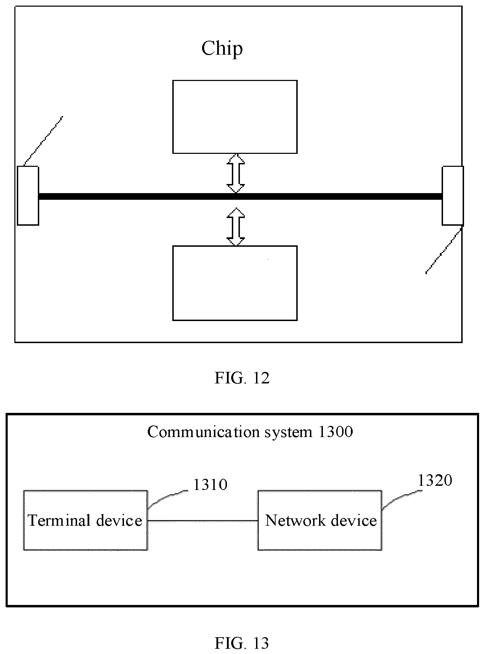

FIG. 12 is a schematic structural diagram of a chip according to an embodiment of the present application. The chip 1200 shown in FIG. 12 includes a processor 1210, where the processor 1210 may invoke and run a computer program from a memory to implement a method in an embodiment of the present application.

Optionally, as shown in FIG. 12, the chip 1200 may further include a memory 1220. The processor 1210 may invoke and run the computer program from the memory 1220 to implement the method in the embodiment of the present application.

The memory 1220 may be a separate device which is independent of the processor 1210, or may be integrated in the processor 1210.

Optionally, the chip 1200 may further include an input interface 1230. The processor 1210 may communicate with other devices or chips by controlling the input interface 1230. Specifically, information or data sent by other devices or chips may be acquired.

Optionally, the chip 1200 may further include an output interface 1240. The processor 1210 may communicate with other devices or chips by controlling the output interface 1240. Specifically, information or data may be output to other devices or chips.

Optionally, the chip may be applied to a network device in the embodiments of the present application, and the chip may implement corresponding processes implemented by the network device in various methods in the embodiments of the present application. It is not described herein for simplicity.

Optionally, the chip may be applied to a mobile terminal or a terminal device in the embodiments of the present application, and the chip may implement corresponding processes implemented by the mobile terminal or the terminal device in various methods in the embodiments of the present application. It is not described herein for simplicity.

It should be understood that, the chip mentioned in the embodiments of the present application may also be referred to as a system on chip, a system chip, a chip system or a system-on-chip chip, etc.

FIG. 13 is a schematic structural diagram of a communication system 1300 provided by an embodiment of the present application. As shown in FIG. 13, the communication system 1300 includes a terminal device 1310 and a network device 1320.

The terminal device 1310 can be used for implementing corresponding functions implemented by the terminal device in the above method, and the network device 1320 can be used for implementing corresponding functions implemented by the network device in the above method. It is not described herein for simplicity.

It should be understood that, the processor in the embodiments of the present application may be an integrated circuit chip having a capability of signal processing. In the implementation process, each step of the foregoing method embodiments may be completed by an integrated logic circuit of hardware in the processor or an instruction in a form of software. The processor may be a general processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or a transistor logic device, and a discrete hardware component. The methods, steps and logical diagrams disclosed in the embodiments of the present application may be implemented or executed. The general processor may be a microprocessor or the processor may also be any conventional processor or the like. The steps of the method disclosed in the embodiments of the present application may be directly executed by a hardware decoding processor, or by a combination of the hardware and software modules in the decoding processor. The software modules may be located in a mature storage medium in the art, i.e. a random memory, a flash memory, a read-only memory, a programmable read-only memory, or an electrically erasable programmable memory, a register, etc. The storage medium is located in a memory, the processor reads information in the memory, and completes the steps of the above methods in combination with hardware thereof.

It should also be understood that, the memory in the embodiments of the present application may be a volatile memory or a non-volatile memory, or may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), which functions as an external cache. Description is illustrative but not restrictive, RAM in many forms may be available, for example, a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDR SDRAM), an enhanced SDRAM (Enhanced SDRAM, ESDRAM), a synchronous link DRAM (Synchronous Link DRAM, SLDRAM) and a direct rambus RAM (Direct Rambus RAM, DR RAM). It should be noted that, the memory in the systems and methods described herein is intended to include, but not be limited to, these and any memory in other suitable types.

It should also be understood that, description of the above memory is illustrative but not restrictive. For example, the memory in the embodiments of the present application may also be a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchronous link DRAM (synchronous link DRAM, SLDRAM) and a direct rambus RAM (Direct Rambus RAM, DR RAM) and the like. That is, the memory in the embodiments of the present application is intended to include, but is not limited to, these and any memory in other suitable types.

An embodiment of the present application further provides a computer readable storage medium for storing a computer program.

Optionally, the computer readable storage medium may be applied to a network device in the embodiments of the present application, and the computer program may cause a computer to execute corresponding processes implemented by the network device in various methods in the embodiments of the present application. It is not described herein for simplicity.

Optionally, the computer readable storage medium may be applied to a mobile terminal or a terminal device in the embodiments of the present application, and the computer program may cause a computer to execute corresponding processes implemented by the mobile terminal or the terminal device in various methods in the embodiments of the present application. It is not described herein for simplicity.

An embodiment of the present application further provides a computer program product which includes computer program instructions.

Optionally, the computer program product may be applied to a network device in the embodiments of the present application, and the computer program instructions may cause a computer to execute corresponding processes implemented by the network device in various methods in the embodiments of the present application. It is not described herein for simplicity.

Optionally, the computer program product may be applied to a mobile terminal or a terminal device in the embodiments of the present application, and the computer program instructions may cause a computer to execute corresponding processes implemented by the mobile terminal/the terminal device in various methods in the embodiments of the present application. It is not described herein for simplicity.

An embodiment of the present application further provides a computer program.

Optionally, the computer program may be applied to a network device in the embodiments of the present application, when the computer program is run on a computer, the computer may be caused to execute corresponding processes implemented by the network device in various methods in the embodiments of the present application. It is not described herein for simplicity.

Optionally, the computer program may be applied to a mobile terminal or a terminal device in the embodiments of the present application, when the computer program is run on a computer, the computer may be caused to execute corresponding processes implemented by the mobile terminal/the terminal device in various methods in the embodiments of the present application. It is not described herein for simplicity.

A person of ordinary skill in the art may realize that, the units and algorithm steps described in the embodiments disclosed herein may be implemented in electronic hardware, or a combination of computer software and electronic hardware. Whether these functions are executed in a manner of hardware or software depends on the particular application and design constraints of the technical solution. Professionals may use different methods for each particular application to implement the described functions, but such implementations should not be considered to be beyond the scope of the present application.

A person skilled in the pertinent art may clearly understand that, for the convenience and simplicity of description, the specific working processes of the systems, apparatuses and units described above may refer to the corresponding processes in the foregoing method embodiments, and are not described herein again.

In the several embodiments provided in the present application, it should be understood that, the disclosed systems, apparatuses and methods may be implemented in other manners. For example, the apparatus embodiments described above are merely schematic. For example, the division of the units is merely a logical function division, and there may be another division manners in actual implementations. For example, a plurality of units or components may be combined or integrated in another system, or some features may be ignored or not performed. In another point, the displayed or discussed coupling to each other or direct coupling or a communication connection may be through some interfaces. Indirect coupling or a communication connection of the apparatuses or the units may be electrical, mechanical or in other forms.

The units described as separate components may or may not be physically separate, and the components displayed as units may or may not be physical units, that is, may be located in one place, or may be distributed to a plurality of network units. Some or all of the units may be selected according to actual needs to achieve the purpose of the solution of the present embodiment.

In addition, each functional unit in each embodiment of the present application may be integrated in one processing unit, or each unit may be physically present separately, or two or more units may be integrated in one unit.

The function may be stored in a computer readable storage medium if it is implemented in the form of a software function unit and sold or used as an independent product. Based on such understanding, the technical solutions of the present application, or a part contributing to the prior art, or a part of the technical solutions may be embodied in the form of a software product essentially. The computer software product is stored in a storage medium, which includes some instructions for enabling a computer device (which may be a personal computer, a server, or a network device, etc.) to execute all or part of the steps of the method described in each embodiment of the present application. The foregoing storage medium includes: a U disk, a mobile hard drive, a read-only memory (Read-Only Memory, ROM), a random access memory (Random Access Memory, RAM), a disk, or a compact disk, and any other medium that can store program codes.

The above are merely specific embodiments of the present application, but the protection scope of the present application is not limited thereto. Any variation or replacement readily conceivable by a person skilled in the art within the technical scope disclosed in the present application should be covered within the protection scope of the present application. Therefore, the protection scope of the present application should be defined by the protection scope of the claims.

## Claims

1. An access control method, wherein the method comprises:
receiving, by a terminal device, first configuration information sent by a network device, wherein the first configuration information comprises at least one set of access control parameters; and
determining, by the terminal device, a first access category and a first access identity corresponding to a first type of service, determining a first set of access control parameters corresponding to the first access category from the first configuration information, and executing an access control operation corresponding to the first type of service according to the first access identity and the first set of access control parameters;
wherein the first type of service is a service for an Internet of Things IOT device.

2. The method according to claim 1, wherein the determining, by the terminal device, the first access category and the first access identity corresponding to the first type of service, determining the first set of access control parameters corresponding to the first access category from the first configuration information, and executing the access control operation corresponding to the first type of service according to the first access identity and the first set of access control parameters comprises:
when it is determined that there exists data transmission of the first type of service, sending, by a non-access stratum NAS of the terminal, first indication information to an access stratum AS of the terminal, wherein the first indication information is used for indicating the first access category and the first access identity corresponding to the first type of service; and
determining, by the AS of the terminal, the first set of access control parameters corresponding to the first access category from the first configuration information, and executing the access control operation according to the first access identity and the first set of access control parameters.

3. The method according to claim 1 or 2, wherein the executing the access control operation according to the first access identity and the first set of access control parameters comprises:
determining whether to allow an access according to the first access identity; and
when it is determined that the access is allowed, executing the access control operation according to the first set of access control parameters.

4. The method according to any one of claims 1 to 3, wherein
the first access category is an access category defined for the first type of service; and/or,
the first access identity is an access identity defined for the first type of service.

5. The method according to any one of claims 1 to 4, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

6. An access control method, wherein the method comprises:
receiving, by a terminal device, first configuration information and second configuration information sent by a network device, wherein the first configuration information comprises a first set of access control parameters, and the second configuration information comprises a corresponding relationship between a number of times of access prohibitions and a scaling factor; and
determining, by the terminal device, a first scaling factor corresponding to a first number of times of access prohibitions for attempting to access a first cell according to the corresponding relationship, and executing an access control operation for the first cell according to the first scaling factor and the first set of access control parameters.

7. The method according to claim 6, wherein the method further comprises:
counting, by the terminal device, a number of times of access prohibitions for accessing the first cell through a first counter; wherein when the terminal device determines that the first cell is prohibited from accessing, the first counter is added with 1; and
determining, by the terminal device, the first number of times of access prohibitions according to a numerical value of the first counter.

8. The method according to claim 7, wherein the method further comprises:
when a cell reselection occurs on the terminal device or the terminal device is capable of accessing the first cell, resetting, by the terminal device, the first counter to 0.

9. The method according to any one of claims 6 to 8, wherein the executing the access control operation for the first cell according to the first scaling factor and the first set of access control parameters comprises:
performing scaling processing on at least one parameter in the first set of access control parameters according to the first scaling factor, and executing the access control operation for the first cell by using the at least one parameter after the scaling processing.

10. The method according to any one of claims 6 to 9, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

11. The method according to any one of claims 6 to 10, wherein the terminal device is an IOT device.

12. An access control method, wherein the method comprises:
receiving, by a terminal device, first configuration information and second configuration information sent by a network device, wherein the first configuration information comprises a first set of access control parameters, and the second configuration information comprises a corresponding relationship between an access category and/or an access identity and a scaling factor; and
determining, by the terminal device, a first scaling factor corresponding to a first access category and/or a first access identity according to the corresponding relationship, and executing an access control operation according to the first scaling factor and the first set of access control parameters.

13. The method according to claim 12, wherein the method further comprises:
when it is determined that there exists data transmission of a first type of service, sending, by a non-access stratum NAS of the terminal, first indication information to an access stratum AS of the terminal, wherein the first indication information is used for indicating the first access category and the first access identity corresponding to the first type of service; and
determining, by the AS of the terminal, the first set of access control parameters corresponding to the first access category from the first configuration information, and determining the first scaling factor corresponding to the first access category and/or the first access identity from the second configuration information.

14. The method according to claim 12 or 13, wherein the executing the access control operation according to the first scaling factor and the first set of access control parameters comprises:
performing scaling processing on at least one parameter in the first set of access control parameters according to the first scaling factor, and executing an access control operation by using the at least one parameter after the scaling processing.

15. The method according to any one of claims 12 to 14, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

16. The method according to any one of claims 12 to 15, wherein the terminal device is an IOT device.

17. An access control method, wherein the method comprises:
receiving, by a terminal device, a radio resource control RRC release message sent by a first cell, wherein the RRC release message carries first configuration information, and the first configuration information comprises a first set of access control parameters; and
before initiating an RRC connection establishment or an RRC connection recovery to the first cell, executing, by the terminal device, an access control operation for the first cell by using the first set of access control parameters.

18. The method according to claim 17, wherein the RRC release message further carries at least one of the following:
first indication information, wherein the first indication information is used for indicating valid time of the first set of access control parameters; and
second indication information, wherein the second indication information is used for indicating a valid area range of the first set of access control parameters.

19. The method according to claim 18, wherein the method further comprises:
after receiving the first set of access control parameters, starting, by the terminal device, a first timer, wherein a duration of the first timer is determined based on the first indication information; and
when the first timer expires, releasing, by the terminal device, the first set of access control parameters.

20. The method according to claim 18, wherein the method further comprises:
after receiving the first set of access control parameters, releasing, by the terminal device, the first set of access control parameters when a cell reselection falls outside the valid area range indicated by the second indication information.

21. The method according to claim 19 or 20, wherein the method further comprises:
after releasing the first set of access control parameters, using, by the terminal device, a set of access control parameters configured in a system broadcast message to execute an access control operation for the first cell when an access to the first cell is attempted again.

22. The method according to any one of claims 17 to 21, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

23. The method according to any one of claims 17 to 22, wherein the terminal device is an IOT device.

24. An access control apparatus, wherein the apparatus comprises:
a receiving unit, configured to receive first configuration information sent by a network device, wherein the first configuration information comprises at least one set of access control parameters; and
a processing unit, configured to determine a first access category and a first access identity corresponding to a first type of service, determine a first set of access control parameters corresponding to the first access category from the first configuration information, and execute an access control operation corresponding to the first type of service according to the first access identity and the first set of access control parameters;
wherein the first type of service is a service for an IOT device.

25. The apparatus according to claim 24, wherein the processing unit is configured to send first indication information to an access stratum AS of a terminal by a non-access stratum NAS of the terminal when it is determined that there exists data transmission of the first type of service, wherein the first indication information is used for indicating the first access category and the first access identity corresponding to the first type of service; and the AS of the terminal determines the first set of access control parameters corresponding to the first access category from the first configuration information, and executes the access control operation according to the first access identity and the first set of access control parameters.

26. The apparatus according to claim 24 or 25, wherein the processing unit is configured to determine whether to allow an access according to the first access identity; and when it is determined that the access is allowed, execute the access control operation according to the first set of access control parameters.

27. The apparatus according to any one of claims 24 to 26, wherein
the first access category is an access category defined for the first type of service; and/or,
the first access identity is an access identity defined for the first type of service.

28. The apparatus according to any one of claims 24 to 27, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

29. An access control apparatus, wherein the apparatus comprises:
a receiving unit, configured to receive first configuration information and second configuration information sent by a network device, wherein the first configuration information comprises a first set of access control parameters, and the second configuration information comprises a corresponding relationship between a number of times of access prohibitions and a scaling factor; and
a processing unit, configured to determine, according to the corresponding relationship, a first scaling factor corresponding to a first number of times of access prohibitions for attempting to access a first cell, and execute an access control operation for the first cell according to the first scaling factor and the first set of access control parameters.

30. The apparatus according to claim 29, wherein the processing unit is further configured to count a number of times of access prohibitions for accessing the first cell by using a first counter; wherein when it is determined that the first cell is prohibited from accessing, the first counter is added with 1; and determine the first number of times of access prohibitions according to a numerical value of the first counter.

31. The apparatus according to claim 30, wherein the processing unit is further configured to reset the first counter to 0 when a cell reselection occurs on the terminal device or the terminal device is capable of accessing the first cell.

32. The apparatus according to any one of claims 29 to 31, wherein the processing unit is configured to perform scaling processing on at least one parameter in the first set of access control parameters according to the first scaling factor, and execute the access control operation for the first cell by using the at least one parameter after the scaling processing.

33. The apparatus according to any one of claims 29 to 32, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

34. The apparatus according to any one of claims 29 to 33, wherein the terminal device is an IOT device.

35. An access control apparatus, the apparatus comprising:
a receiving unit, configured to receive first configuration information and second configuration information sent by a network device, wherein the first configuration information comprises a first set of access control parameters, and the second configuration information comprises a corresponding relationship between an access category and/or an access identity and a scaling factor; and
a processing unit, configured to determine, according to the corresponding relationship, a first scaling factor corresponding to a first access category and/or a first access identity, and execute an access control operation according to the first scaling factor and the first set of access control parameters.

36. The apparatus according to claim 35, wherein the processing unit is configured to send first indication information to an access stratum AS of a terminal by a non-access stratum NAS of the terminal when it is determined that there exists data transmission of a first type of service, wherein the first indication information is used for indicating the first access category and the first access identity corresponding to the first type of service; and the AS of the terminal determines the first set of access control parameters corresponding to the first access category from the first configuration information, and determines a first scaling factor corresponding to the first access category and/or the first access identity from the second configuration information.

37. The apparatus according to claim 35 or 36, wherein the processing unit is configured to perform scaling processing on at least one parameter in the first set of access control parameters according to the first scaling factor, and execute an access control operation by using the at least one parameter after the scaling processing.

38. The apparatus according to any one of claims 35 to 37, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

39. The apparatus according to any one of claims 35 to 38, wherein the terminal device is an IOT device.

40. An access control apparatus, wherein the apparatus comprises:
a receiving unit, configured to receive an RRC release message sent by a first cell, wherein the RRC release message carries first configuration information, and the first configuration information comprises a first set of access control parameters; and
a processing unit, configured to execute an access control operation for the first cell by using the first set of access control parameters before an RRC connection establishment or an RRC connection recovery is initiated to the first cell.

41. The apparatus according to claim 40, wherein the RRC release message further carries at least one of the following:
first indication information, wherein the first indication information is used for indicating valid time of the first set of access control parameters; and
second indication information, wherein the second indication information is used for indicating a valid area range of the first set of access control parameters.

42. The apparatus according to claim 41, wherein the processing unit is further configured to: after the first set of access control parameters is received, start a first timer, wherein a duration of the first timer is determined based on the first indication information; and when the first timer expires, release the first set of access control parameters.

43. The apparatus according to claim 41, wherein the processing unit is further configured to: after the first set of access control parameters is received, release the first set of access control parameters when a cell reselection falls outside the valid area range indicated by the second indication information.

44. The apparatus according to claim 42 or 43, wherein the processing unit is further configured to: after the first set of access control parameters is released, use a set of access control parameters configured in a system broadcast message to execute an access control operation for the first cell when an access to the first cell is attempted again.

45. The apparatus according to any one of claims 40 to 44, wherein the first set of access control parameters comprises at least one of the following:
a first parameter, wherein the first parameter is used for determining an access identity that allows an access and/or an access identity that prohibits an access;
a second parameter, wherein the second parameter is used for determining a barring factor; and
a third parameter, wherein the third parameter is used for determining barring time.

46. The apparatus according to any one of claims 40 to 45, wherein the terminal device is an IOT device.

47. A terminal device, comprising: a processor and a memory; wherein the memory is configured to store a computer program, and the processor is configured to invoke and run the computer program stored in the memory to execute the method according to any one of claims 1 to 23.

48. A chip, comprising: a processor configured to invoke and run a computer program from a memory, to enable a device installed with the chip to execute the method according to any one of claims 1 to 23.

49. A computer readable storage medium, configured to store a computer program, and the computer program causes a computer to execute the method according to any one of claims 1 to 23.

50. A computer program product, comprising computer program instructions which cause a computer to execute the method according to any one of claims 1 to 23.

51. A computer program, wherein the computer program causes a computer to execute the method according to any one of claims 1 to 23.
